(19) Europäisches Patentamt
European Patent Office
Office européen des brevets

(11) **EP 2 221 952 A2**

(12) **EUROPÄISCHE PATENTANMELDUNG**

(43) Veröffentlichungstag:
**25.08.2010 Patentblatt 2010/34**

(51) Int Cl.:
***H02M 3/158*** (2006.01)

(21) Anmeldenummer: **10153681.1**

(22) Anmeldetag: **16.02.2010**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(30) Priorität: **18.02.2009 DE 102009010566**

(71) Anmelder: **Schmidhauser AG**
**8590 Romanshorn (CH)**

(72) Erfinder: **Schekulin, Dr.-Ing. Dirk**
**9000, St. Gallen (CH)**

(74) Vertreter: **Patentanwälte**
**Ruff, Wilhelm, Beier, Dauster & Partner**
**Postfach 10 40 36**
**70035 Stuttgart (DE)**

(54) **Bidirektionaler Gleichstromsteller und System**

(57) Ein bidirektionaler Gleichstromsteller (GS) umfasst einen ersten Anschluss (K1) zum Anschließen eines positiven Pols eines Energiespeichers (CE) und einen zweiten Anschluss (K2) zum Anschließen eines negativen Pols des Energiespeichers (CE), und einen dritten Anschluss (K3) und einen vierten Anschluss (K4) zum Anschließen eines Gleichrichter/Wechselrichters (GR/WR), wobei an dem vierten Anschluss (K4) ein Bezugspotential des Gleichrichter/Wechselrichters (GR/WR) ansteht. Ein erstes Schaltmittel (S1) und eine erste Freilaufdiode (D1) sind parallel geschaltet und zwischen den zweiten Anschluss (K2) und den vierten Anschluss (K4) eingeschleift.

Fig.1

EP 2 221 952 A2

## Beschreibung

### Anwendungsgebiete und Stand der Technik

Die Erfindung betrifft einen bidirektionalen Gleichstromsteller und ein System mit einem bidirektionalen Gleichstromsteller.

Gleichstromsteller, die auch als DC-DC-Wandler oder Chopper bezeichnet werden, wandeln eine Eingangsgleichspannung mit einem ersten Spannungspegel in eine Ausgangsgleichspannung mit einem vom ersten Spannungspegel verschiedenen, zweiten Spannungspegel um. Hierzu wird die Eingangsspannung zunächst mittels ansteuerbarer Schaltmittel, beispielsweise Leistungshalbleitern in Form von Leistungs-MOSFETs, IGBTs (insulated-gate bipolar Transistor) oder abschaltbaren Thyristoren, in eine hochfrequente Wechselspannung umgewandelt, die zur Erzeugung der Ausgangsgleichspannung weiterverarbeitet und anschließend gleichgerichtet wird. Bidirektionale Gleichstromsteller können dynamisch, d.h. im laufenden Betrieb, Eingang und Ausgang vertauschen, d.h. in einem ersten Modus dient ein erster Anschluss als Eingang, an den eine zu wandelnde Gleichspannung angelegt wird, und ein anderer Anschluss dient als Ausgang, an dem eine auf Basis der Eingangsspannung erzeugte Ausgangsspannung ausgegeben wird, und in einem zweiten Modus wird der ursprüngliche Eingang zum Ausgang und der ursprüngliche Ausgang zum Eingang.

Derartige bidirektionale Gleichstromsteller werden häufig in Verbindung mit Gleichrichtern/Wechselrichtern verwendet, die im Gleichrichterbetrieb eine von einem Elektromotor im Generatorbetrieb erzeugte Wechselspannung gleichrichten und andernfalls eine zugeführte Gleichspannung in eine Wechselspannung zur Ansteuerung des Elektromotors im Motorbetrieb umwandeln.

Die DE 10 2005 041 825 A1 zeigt ein herkömmliches System mit einer Drehstrommaschine, die im Motorbetrieb und im Generatorbetrieb betrieben werden kann, einem Gleichrichter/Wechselrichter, der mit der Drehstrommaschine gekoppelt ist, einem bidirektionalen Gleichstromsteller, der mit dem Gleichrichter/Wechselrichter gekoppelt ist, und einem Energiespeicher, der mit dem Gleichstromsteller gekoppelt ist. Das System ist Teil eines Hybridantriebs eines Kraftfahrzeugs, bei dem im Motorbetrieb der Drehstrommaschine, beispielsweise beim Beschleunigen, Energie aus dem Energiespeicher entnommen wird, und im Generatorbetrieb der Drehstrommaschine, beispielsweise beim Bremsen, Energie in den Energiespeicher eingespeist wird.

Aus Sicherheitsgründen werden derartige Systeme üblicherweise floatend ausgelegt, d.h. es besteht keine galvanische Kopplung des Systems mit dem Fahrzeugchassis als Bezugspotential. Üblicherweise werden Energiespeicher, Gleichstromsteller, Gleichrichter/Wechselrichter und Drehstrommaschine mit vergleichsweise langen Kabeln miteinander verbunden. Aufgrund der Ausdehnung werden abgeschirmte Kabel verwendet, die zumindest maschinenseitig zu erheblichen zusätzlichen Ableitströmen über den Schirm führen. Die kapazitive Belastung der Leistungsschalter führt während der Kommutierung zu Potentialsprüngen der so genannten Zwischenkreispotentiale.

Bei dem in der DE 10 2005 041 825 A1 gezeigten System ist der negative Pol bzw. der Minuspol des Energiespeichers direkt, d.h. ohne zwischengeschaltete Bauelemente, mit einem Bezugspotential des Gleichrichter/Wechselrichters bzw. mit dem Spannungszwischenkreis verbunden, wodurch Potentialsprünge des Bezugspotentials des Gleichrichter/Wechselrichters bzw. des Spannungszwischenkreises unmittelbar in Richtung des Minuspols des Energiespeichers übertragen werden, wodurch Störabstrahlungen entstehen.

Da die Anforderungen im Bereich elektromagnetischer Verträglichkeit stetig steigen, ist es notwendig, diese Störabstrahlungen zu minimieren.

### Aufgabe und Lösung

Der Erfindung liegt die Aufgabe zugrunde, einen bidirektionalen Gleichstromsteller und ein System mit einem bidirektionalen Gleichstromsteller mit reduzierter Störabstrahlung zur Verfügung stellen, die eine effiziente Störunterdrückung ohne aufwändige zusätzliche Entstörmaßnahmen ermöglichen.

Die Erfindung löst diese Aufgabe durch einen bidirektionalen Gleichstromsteller nach Anspruch 1 und ein System nach Anspruch 10.

Bevorzugte Ausführungsformen sind Gegenstand der Unteransprüche, die hiermit durch Bezugnahme zum Gegenstand der Beschreibung gemacht werden.

Der erfindungsgemäße bidirektionale Gleichstromsteller umfasst einen ersten Anschluss zum Anschließen eines positiven Pols eines Energiespeichers und einen zweiten Anschluss zum Anschließen eines negativen Pols des Energiespeichers. Ein dritter Anschluss und ein vierter Anschluss dienen zum Anschließen eines Gleichrichter/Wechselrichters, wobei an dem vierten Anschluss ein Bezugspotential des Gleichrichter/Wechselrichters bzw. ein Bezugspotential einer Zwischenkreisspannung ansteht. Weiter sind mindestens ein erstes ansteuerbares Schaltmittel und mindestens eine erste Freilaufdiode vorgesehen, die parallel geschaltet sind. Das erste Schaltmittel und die erste Freilaufdiode sind zwischen den zweiten Anschluss und den vierten Anschluss eingeschleift. Es versteht sich, dass dem ersten Schaltmittel und der ersten Freilaufdiode weitere Schaltmittel bzw. weitere Freilaufdioden parallel geschaltet sein können und/oder dass das erste Schaltmittel und die erste Freilaufdiode mit weiteren Schaltmitteln bzw. weiteren Freilaufdioden in Serie zwischen den zweiten Anschluss und den vierten Anschluss eingeschleift sein können. Das erste Schaltmittel und die erste Freilaufdiode entkoppeln das Bezugspotential des Gleichrichter/Wechselrichters vom negativen Pol des Energiespeichers, wodurch Störungen auf dem Bezugspotential des Gleichrichter/Wechselrichters, die durch den Betrieb des Gleichrichter/Wechselrichters unweigerlich verursacht werden, teilweise oder vollständig von dem ersten Schaltmittel und der ersten Freilaufdiode geblockt werden, wodurch aufgrund der Schaltungstopologie die Störabstrahlung verglichen mit herkömmlichen Lösungen deutlich reduziert ist, ohne dass hierzu aufwändige zusätzliche Entstörmaßnahmen notwendig sind.

In einer Weiterbildung ist ein erstes induktives Bauelement vorgesehen, das mit der Parallelschaltung aus erstem Schaltmittel und erster Freilaufdiode seriell zwischen den zweiten Anschluss und den vierten Anschluss eingeschleift ist.

In einer Weiterbildung sind mindestens ein zweites Schaltmittel und mindestens eine zweite Freilaufdiode vorgesehen, wobei das zweite Schaltmittel und die zweite Freilaufdiode parallel geschaltet sind und das zweite Schaltmittel und die zweite Freilaufdiode zwischen den ersten Anschluss und den dritten Anschluss eingeschleift sind. Das zweite Schaltmittel und die zweite Freilaufdiode entkoppeln den ersten Anschluss vom dritten Anschluss, wodurch Störungen am dritten Anschluss, verursacht durch den Betrieb des Gleichrichter/ Wechselrichters, teilweise oder vollständig von dem zweiten Schaltmittel und der zweiten Freilaufdiode geblockt werden, wodurch aufgrund der Schaltungstopologie die Störabstrahlung verglichen mit herkömmlichen Lösungen nochmals deutlich reduziert ist, ohne dass hierzu aufwändige zusätzliche Entstörmaßnahmen notwendig sind.

In einer Weiterbildung ist ein zweites induktives Bauelement vorgesehen, das mit der Parallelschaltung aus zweitem Schaltmittel und zweiter Freilaufdiode seriell zwischen den ersten Anschluss und den dritten Anschluss eingeschleift ist. Das erste und das zweite induktive Bauelement können beispielsweise durch zwei getrennte Einzeldrosseln oder als magnetisch gekoppelte Drosseln ausgeführt sein.

In einer Weiterbildung sind mindestens ein drittes Schaltmittel und mindestens eine dritte Freilaufdiode vorgesehen, wobei das dritte Schaltmittel und die dritte Freilaufdiode parallel geschaltet sind und das dritte Schaltmittel und die dritte Freilaufdiode zwischen den ersten Anschluss und den zweiten Anschluss eingeschleift sind.

In einer Weiterbildung umfasst der bidirektionale Gleichstromsteller einen ersten Kondensator, einen zweiten Kondensator, wobei der erste Kondensator und der zweite Kondensator seriell zwischen den dritten Anschluss und den vierten Anschluss eingeschleift sind, eine erste Diode, wobei die erste Diode in Durchlassrichtung zwischen einen Verbindungsknoten des ersten Kondensators und des zweiten Kondensators und einen Verbindungsknoten der Parallelschaltung aus zweitem Schaltmittel und zweiter Freilaufdiode und der der Parallelschaltung aus drittem Schaltmittel und dritter Freilaufdiode eingeschleift ist, und eine zweite Diode, wobei die zweite Diode in Sperrrichtung zwischen den Verbindungsknoten des ersten Kondensators und des zweiten Kondensators und einen Verbindungsknoten der Parallelschaltung aus drittem Schaltmittel und dritter Freilaufdiode und der der Parallelschaltung aus erstem Schaltmittel und erster Freilaufdiode eingeschleift ist.

In einer Weiterbildung umfasst der bidirektionale Gleichstromsteller einen ersten Kondensator, einen zweiten Kondensator, wobei der erste Kondensator und der zweite Kondensator seriell zwischen den dritten Anschluss und den vierten Anschluss eingeschleift sind, mindestens ein viertes Schaltmittel und mindestens eine vierte Freilaufdiode, wobei das vierte Schaltmittel und die vierte Freilaufdiode parallel geschaltet sind, das zweite induktive Bauelement, die Parallelschaltung aus drittem Schaltmittel und dritter Freilaufdiode, die Parallelschaltung aus viertem Schaltmittel und vierter Freilaufdiode und das erste induktive Bauelement seriell zwischen den ersten Anschluss und den zweiten Anschluss eingeschleift sind, und ein Verbindungsknoten des ersten Kondensators und des zweiten Kondensators und ein Verbindungsknoten der Parallelschaltung aus drittem Schaltmittel und dritter Freilaufdiode und der Parallelschaltung aus viertem Schaltmittel und vierter Freilaufdiode elektrisch miteinander verbunden sind.

In einer Weiterbildung ist der Parallelschaltung aus erstem Schaltmittel und erster Freilaufdiode, der Parallelschaltung aus zweitem Schaltmittel und zweiter Freilaufdiode, der Parallelschaltung aus drittem Schaltmittel und dritter Freilaufdiode und/oder der Parallelschaltung aus viertem Schaltmittel und vierter Freilaufdiode jeweils ein Kondensator parallel geschaltet.

In einer Weiterbildung sind die Schaltmittel IGBTs (insulated-gate bipolar transistor). Alternativ können die Schaltmittel beispielsweise auch als Leistungshalbleiter in Form von Leistungs-MOSFETs oder abschaltbaren Thyristoren realisiert sein.

Das erfindungsgemäße System umfasst einen Energiespeicher, einen Gleichrichter/Wechselrichter und einen vorgenannten bidirektionalen Gleichstromsteller.

In einer Weiterbildung ist der Energiespeicher ein Kondensator mit hoher Energiedichte, insbesondere ein Doppelschicht-Kondensator, der auch als Supercap bezeichnet wird. Der Energiespeicher kann auch einen Akkumulator oder eine Kombination aus Kondensator mit hoher Energiedichte und Akkumulator umfassen.

In einer Weiterbbildung umfasst das System eine mit dem Gleichrichter/Wechselrichter gekoppelte Drehstrommaschine. Der Gleichrichter/Wechselrichter kann auch mit einer Transversalflussmaschine oder einem Verbundnetz gekoppelt sein, wobei für den Fall der Transversalflussmaschine vier Brückenzweige im Gleichrichter/Wechselrichter vorgesehen sein können.

In einer Weiterbildung sind mindestens zwei parallel geschaltete bidirektionale Gleichstromsteller vorgesehen, wobei die jeweiligen Schaltmittel eines der mindestens zwei bidirektionalen Gleichstromsteller bezüglich der jeweiligen Schaltmittel eines anderen der mindestens zwei bidirektionalen Gleichstromsteller versetzt synchronisiert angesteuert sind.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in Zwischen-Überschriften und einzelne Abschnitte beschränkt die unter diesen gemachten Aussagen nicht in ihrer Allgemeingültigkeit.

**Kurzbeschreibung der Zeichnungen**

Ausführungsbeispiele der Erfindungen sind in den Zeichnungen schematisch dargestellt und werden im Folgenden näher erläutert. Es zeigt/zeigen:

Fig. 1    eine erste Ausführungsform eines Systems mit einem erfin- dungsgemäßen bidirektionalen Gleichstromsteller,

Fig. 2    Ersatzschaltbilder unterschiedlicher Betriebszyklen des in Fig. 1 gezeigten bidirektionalen Gleichstromstellers,

Fig. 3    eine weitere Ausführungsform eines Systems mit einem erfin- dungsgemäßen bidirektionalen Gleichstromsteller,

Fig. 4    eine weitere Ausführungsform eines Systems mit einem erfin- dungsgemäßen bidirektionalen Gleichstromsteller,

Fig. 5    eine weitere Ausführungsform eines Systems mit einem erfin- dungsgemäßen bidirektionalen Gleichstromsteller und

Fig. 6    einen Anwendungsfall, bei dem mehrere erfindungsgemäße bidirektionalen Gleichstromsteller zur Verringerung der Wellig- keit eines energiespeicherseitigen Stroms parallel geschaltet sind.

**Detaillierte Beschreibung der Ausführungsbeispiele**

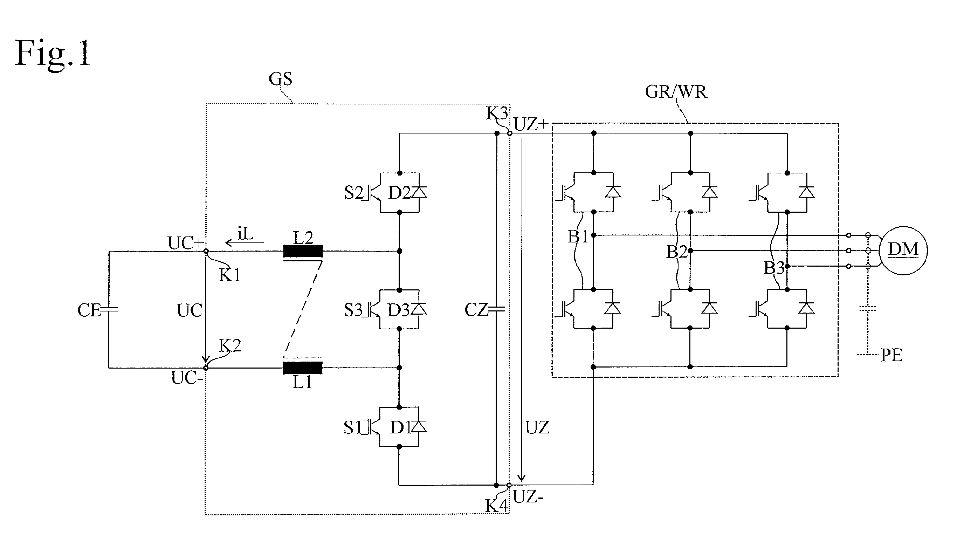

Fig. 1 zeigt eine erste Ausführungsform eines Systems mit einem Energiespeicher in Form eines Doppelschicht-Kondensators CE, einem bidirektionalen Gleichstromsteller GS, einem Gleichrichter/Wechselrichter GR/WR und einer Drehstrommaschine DM, die als Synchron- oder als Asynchronmaschine ausgeführt sein kann.

Die Drehstrommaschine DM kann im Motorbetrieb und im Generatorbetrieb betrieben werden. Das gezeigte System ist Teil eines nicht weiter dargestellten Hybridantriebs eines nicht dargestellten Kraftfahrzeugs, bei dem im Motorbetrieb der Drehstrommaschine DM, beispielsweise beim Beschleunigen, Energie aus dem Energiespeicher CE entnommen wird und im Generatorbetrieb der Drehstrommaschine DM, beispielsweise beim Bremsen, Energie in den Energiespeicher CE eingespeist wird.

Der Gleichrichter/Wechselrichter GR/WR ist herkömmlich mit einer dreiphasige Leistungsschalterbrücke B1, B2 und B3 realisiert, die entweder als Wechselrichter oder als Gleichrichter arbeitet, und entspricht beispielsweise dem in der DE 10 2005 041 825 A1 gezeigten Gleichrichter/Wechselrichter, sodass auf eine detaillierte Beschreibung verzichtet werden kann.

Die gezeigten Systemkomponenten sind galvanisch von einer Prozesserde PE, d.h. einem Fahrzeugchassis, getrennt.

Der bidirektionale Gleichstromsteller GS umfasst einen ersten Anschluss K1 zum Anschließen eines positiven Pols des Doppelschicht-Kondensators CE einen zweiten Anschluss K2 zum Anschließen eines negativen Pols des Doppelschicht-Kondensators CE, einen dritten Anschluss K3 und einem vierten Anschluss K4 zum Anschließen des Gleichrichter/Wechselrichters GR/WR, wobei an dem vierten Anschluss K4 ein Bezugspotential UZ- des Gleichrichter/Wechselrichters GR/WR anliegt. Zwischen die Anschlüsse K3 und K4 ist ein Zwischenkreiskondensator CZ eingeschleift, der Bestandteil des Gleichstromsteller GS, Bestandteil des Gleichrichter/Wechselrichters GR/WR oder getrennt vom Gleichstromsteller GS bzw. vom Gleichrichter/Wechselrichter GR/WR vorgesehen sein kann.

Am Anschluss K1 des Gleichstromstellers GS liegt das Potential UC+ und am Anschluss K2 das Potential UC- an, wobei das Potential UC- ein Bezugspotential des Gleichstromstellers GS bildet.

Ein erstes Schaltmittel in Form eines IGBT S1 und eine erste Freilaufdiode D1 sind parallel geschaltet und zwischen den zweiten Anschluss K2 und den vierten Anschluss K4 eingeschleift. Das erste Schaltmittel S1 und die erste Freilaufdiode D1 entkoppeln die Potential UZ- und UC-, sodass Potentialsprünge des Potentials UZ- bedingt durch Schaltvorgänge des Gleichrichter/ Wechselrichters GR/WR nicht oder nur gedämpft auf das Potential UC- überkoppeln, wodurch eine Störemission des Systems stark reduziert wird, ohne dass hierzu weitere aufwändige Entstörmaßnahmen notwendig sind, wie beispielsweise Y-Kondensatoren, Common-Mode-Filter auf Energiespeicherseite und kombinierte Differential-Mode-/Common-Mode-Filter auf der Maschinenseite.

Der Gleichstromsteller GS umfasst weiter ein erstes induktives Bauelement in Form einer Drossel L1, die mit der Parallelschaltung aus erstem Schaltmittel S1 und erster Freilaufdiode D1 seriell zwischen den zweiten Anschluss K2 und den vierten Anschluss K4 eingeschleift ist, ein zweites Schaltmittel in Form eines IGBT S2 und eine zweite Freilaufdiode D2, wobei das zweite Schaltmittel S2 und die zweite Freilaufdiode D2 parallel geschaltet sind und das zweite Schaltmittel S2 und die zweite Freilaufdiode D2 zwischen den ersten Anschluss K1 und den dritten Anschluss K3 eingeschleift sind, ein zweites induktives Bauelement in Form einer Drossel L2, die mit der Parallelschaltung aus zweitem Schaltmittel S2 und zweiter Freilaufdiode D2 seriell zwischen den ersten Anschluss K1 und den dritten Anschluss K3 eingeschleift ist, ein drittes Schaltmittel in Form eines IGBT S3 und eine dritte Freilaufdiode D3, wobei das dritte Schaltmittel S3 und die dritte Freilaufdiode D3 parallel geschaltet sind und das dritte Schaltmittel S3 und die dritte Freilaufdiode D3 zwischen den ersten Anschluss K1 und den zweiten Anschluss K2 eingeschleift sind.

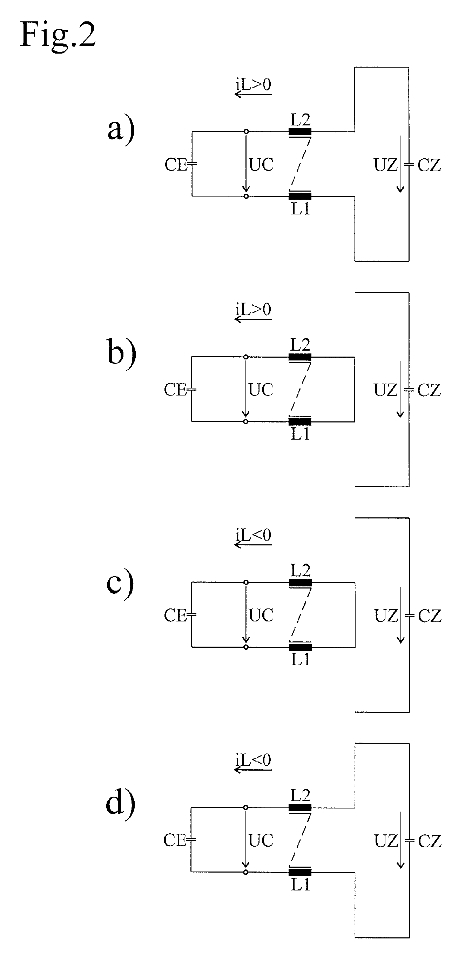

Fig. 2 zeigt Ersatzschaltbilder unterschiedlicher Betriebszyklen bzw. Betriebsfälle des in Fig. 1 gezeigten bidirektionalen Gleichstromstellers GS.

Zunächst sei ein Betriebsfall beschrieben, bei dem der Energiespeicher CE geladen wird. Während des aktiven Bremsvorgangs des Fahrzeugs arbeitet die Maschine DM im Generatorbetrieb, d.h. der Gleichstromsteller GS arbeitet als Tiefsetzsteller (iL > 0) und der kapazitive Energiespeicher CE wird aufgeladen. Bezüglich der Leitend-Phasen können nachfolgend zwei Schaltmittelzustände unterschieden werden.

Figur 2, a zeigt ein Ersatzschaltbild für einen Fall, bei dem ein Strom getrieben wird. Hierbei sind die IGBTs S1 und S2 leitend, wohingegen S3, D1, D2, D3 jeweils sperren. Somit wird der positive Strom iL erhöht:

$$\frac{diL}{dt} = \frac{UZ - UC}{L} > 0 \text{ und iL > 0}$$

Figur 2, b zeigt das Ersatzschaltbild für den Fall des Freilaufs. Nach dem Ausschalten der Schaltmittel S1 und S2 kommutiert der Strom auf Diode D3, d.h. D3 leitet, wohingegen S1, S2, S3, D1 und D2 sperren. Somit wird der positive Strom iL erniedrigt:

$$\frac{diL}{dt} = \frac{-UC}{L} < 0 \text{ und iL > 0}$$

Während des Beschleunigungsvorgangs des Fahrzeugs arbeitet die Maschine DM im Motorbetrieb, d.h. der Gleichstromsteller GS arbeitet als Hochsetzsteller (iL < 0) und der kapazitive Energiespeicher CE wird entladen. Bezüglich der Leitend-Phasen können wiederum zwei Schaltmittelzustände unterschieden werden.

In Fig. 2, c ist der Fall dargestellt, bei dem ein Strom getrieben wird. Hierbei ist S3 leitend, wohingegen S1, S2, D1, D2 und D3 sperren. Somit wird der negative Strom iL erhöht:

$$\frac{diL}{dt} = \frac{-UC}{L} < 0 \text{ und iL < 0}$$

In Fig. 2, d ist der Fall des Freilaufs dargestellt. Nach dem Ausschalten des Schaltmittels S3 kommutiert der Strom auf die Dioden D1 und D2, d.h. D1 und D2 leiten und S1, S2, S3 und D3 sperren. Somit wird der negative Strom iL erniedrigt:

$$\frac{diL}{dt} = \frac{UZ - UC}{L} > 0 \text{ und iL < 0}$$

Die Schaltmittel bzw. IGBTs S1, S2 und S3 sowie die Leistungsschalterbrücken B1, B2 und B3 werden von einer nicht gezeigten Ansteuereinheit, beispielsweise einem Mikroprozessor, geeignet angesteuert.

Nachfolgend sind Varianten des bidirektionalen Gleichstromstellers GS bzw. des Systems beschrieben.

Bei einer typischen Zwischenkreisspannung UZ von 750V (max. 850V) werden normalerweise Leistungshalbleiter S1 bis S3 mit einer Spannungsfestigkeit von 1200 V eingesetzt. Basierend auf der Topologie gemäß Fig. 1 sind Schaltungsvarianten denkbar, die teilweise oder vollständig mit einer reduzierten Spannungsfestigkeit auskommen. Damit verbunden sind geringere Leitend- und Schaltverluste, wodurch eine Erhöhung der Schaltfrequenz und somit eine Verringerung des Bauvolumens der Drosseln L1 und L2 ermöglicht wird.

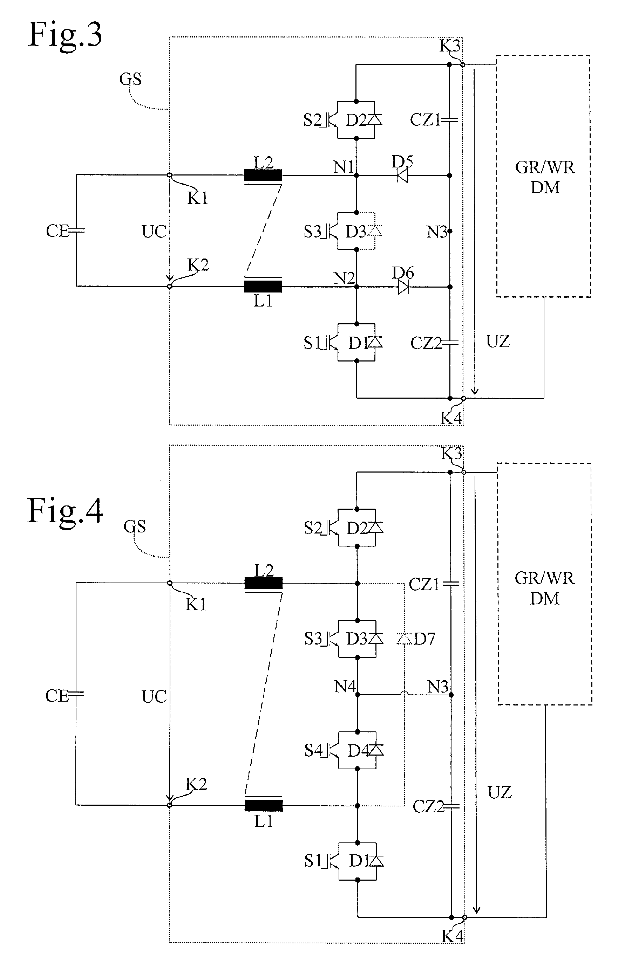

Die in Fig. 3 gezeigte Ausführungsform umfasst zusätzlich einen ersten Kondensator CZ1, einen zweiten Kondensator CZ2, wobei der erste Kondensator CZ1 und der zweite Kondensator CZ2 seriell zwischen den dritten Anschluss K3 und den vierten Anschluss K4 eingeschleift sind, eine erste Diode D5, wobei die erste Diode D5 in Durchlassrichtung zwischen einen Verbindungsknoten N3 des ersten Kondensators CZ1 und des zweiten Kondensators CZ2 und einen Verbindungsknoten N1 der Parallelschaltung aus zweitem Schaltmittel S2 und zweiter Freilaufdiode D2 und der der Parallelschaltung aus drittem Schaltmittel S3 und dritter Freilaufdiode D3 eingeschleift ist, und eine zweite Diode D6, wobei die zweite Diode D6 in Sperrrichtung zwischen den Verbindungsknoten N3 des ersten Kondensators CZ1 und des zweiten Kondensators CZ2 und einen Verbindungsknoten N2 der Parallelschaltung aus drittem Schaltmittel S3 und dritter Freilaufdiode D3 und der der Parallelschaltung aus erstem Schaltmittel S1 und erster Freilaufdiode D1 eingeschleift ist.

Bei der in Fig. 3 gezeigten Ausführungsform werden die Spannungen der gesperrten Schalter S1 und S2 über die Dioden D5 und D6 auf die halbe Zwischenkreisspannung UZ geklemmt. Damit ist es möglich, für S1, S2, D1, D2, D5 und D6 sehr schnelle und verlustarme Bauelemente mit lediglich 600V Spannungsfestigkeit zu verwenden. S3 und D3 sind 1200V-Bauelemente, wobei die Diode D3 bei dieser Ausführungsform optional ist, falls die Kommutierung vorrangig über D5 und D6 erfolgt.

Fig. 4 zeigt eine Ausführungsform, bei der ausschließlich 600V-Leistungshalbleiter verwendet werden. Diese Ausführungsform umfasst den ersten Kondensator CZ1, den zweiten Kondensator CZ2, wobei der erste Kondensator CZ1 und der zweite Kondensator CZ2 seriell zwischen den dritten Anschluss K3 und den vierten Anschluss K4 eingeschleift sind, ein viertes Schaltmittel in Form eines IGBT S4 und eine vierte Freilaufdiode D4, wobei das vierte Schaltmittel S4 und die vierte Freilaufdiode D4 parallel geschaltet sind, das zweite induktive Bauelement L2, die Parallelschaltung aus drittem Schaltmittel S3 und dritter Freilaufdiode D3, die Parallelschaltung aus viertem Schaltmittel S4 und vierter Freilaufdiode D4 und das erste induktive Bauelement L1 seriell zwischen den ersten Anschluss K1 und den zweiten Anschluss K2 eingeschleift sind, und der Verbindungsknoten N3 des ersten Kondensators CZ1 und des zweiten Kondensators CZ2 und ein Verbindungsknoten N4 der Parallelschaltung aus drittem Schaltmittel S3 und dritter Freilaufdiode D3 und der Parallelschaltung aus viertem Schaltmittel S4 und vierter Freilaufdiode D4 elektrisch miteinander verbunden sind.

Die Schaltmittel S1 und S2 bzw. S3 und S4 werden jeweils simultan angesteuert. Die Diode D7 ist optional und dient zur Verringerung der Freilaufverluste im Tiefsetzstellerbetrieb und muss eine Spannungsfestigkeit von 1200V aufweisen.

Ein anderer Ansatz zur Erhöhung der Schaltfrequenz bei Verwendung von 1200V-Leistungshalbleitern ist resonantes Schalten.

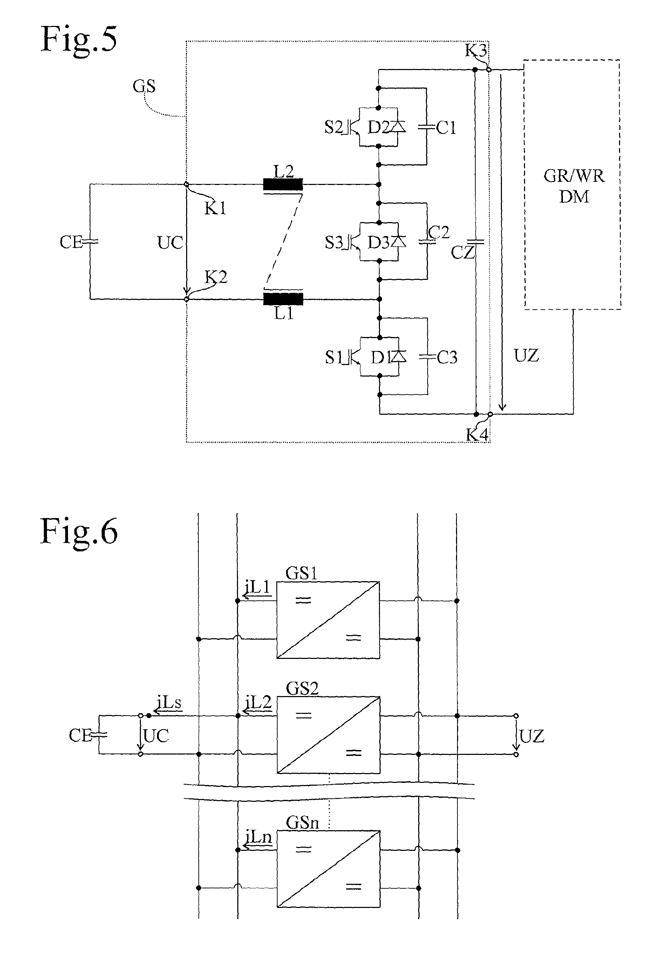

Fig. 5 zeigt eine Ausführungsform, bei der basierend auf der in Fig. 1 gezeigten Ausführungsform zusätzliche Kondensatoren C1, C2 und C3 parallel zu den Schaltmitteln S1, S2 und S3 angeordnet sind. Damit ist theoretisch eine vollständige Entlastung des Schaltvorgangs möglich, da in der Ausschaltphase der Laststrom über den jeweiligen Kondensator fließt und ein Einschalten bei Spannung Null (ZVS = Zero Voltage Switch) erfolgt. Um den ZVS-Zustand zu erreichen, ist eine Stromumkehr von iL erforderlich. Die damit verbundene hohe Welligkeit des Drosselstroms erfordert ggf. ein zusätzliches Filter zum Energiespeicher CE hin.

Die Verringerung der Welligkeit des energiespeicherseitigen Stroms kann auch durch die in Fig. 6 gezeigte Ausführungsform erzielt werden, bei der mehrere gleichartige, parallel geschaltete Gleichstromsteller GS1 bis GSn vorgesehen sind. Die einzelnen Gleichstromsteller GS1 bis GSn können wie in den Fig. 1 bis Fig. 6 dargestellt ausgebildet sein. Durch versetzte synchronisierte Taktung der Halbleiterschalter ergibt sich für den Summenstrom iLS eine deutlich kleinere Welligkeit als die der Einzelströme iL1, iL2, ... iLn .

Die gezeigten Ausführungsformen stellen eine optimierte Schaltungstopologie mit einem Halbleiterschalter S1 und einer insbesondere aufgeteilten Drossel L1 und L2 zur Verfügung, die hinsichtlich der Potentiale aller Anschlussklemmen K1 bis K4 symmetrisch arbeitet und ausgangsseitig Potentialsprünge vermeidet, wodurch aufwändige und teure Leistungsfilter entfallen können.

**Patentansprüche**

1. Bidirektionaler Gleichstromsteller (GS), mit

  - einem ersten Anschluss (K1) zum Anschließen eines positiven Pols eines Energiespeichers (CE) und einem zweiten Anschluss (K2) zum Anschließen eines negativen Pols des Energiespeichers (CE), und
  - einem dritten Anschluss (K3) und einem vierten Anschluss (K4) zum Anschließen eines Gleichrichter/Wechselrichters (GR/WR), wobei an dem vierten Anschluss (K4) ein Bezugspotential des Gleichrichter/Wechselrichters (GR/WR) ansteht,

  **gekennzeichnet durch**

  - ein erstes Schaltmittel (S1) und
  - eine erste Freilaufdiode (D1), wobei

    - das erste Schaltmittel (S1) und die erste Freilaufdiode (D1) parallel geschaltet sind und
    - das erste Schaltmittel (S1) und die erste Freilaufdiode (D1) zwischen den zweiten Anschluss (K2) und den vierten Anschluss (K4) eingeschleift sind.

2. Bidirektionaler Gleichstromsteller nach Anspruch 1, **gekennzeichnet durch**

  - ein erstes induktives Bauelement (L1), das mit der Parallelschaltung aus erstem Schaltmittel und erster Freilaufdiode seriell zwischen den zweiten Anschluss und den vierten Anschluss eingeschleift ist.

3. Bidirektionaler Gleichstromsteller nach Anspruch 1 oder 2, **gekennzeichnet durch**

  - ein zweites Schaltmittel (S2) und
  - eine zweite Freilaufdiode (D2), wobei
  - das zweite Schaltmittel und die zweite Freilaufdiode parallel geschaltet sind und

- das zweite Schaltmittel und die zweite Freilaufdiode zwischen den ersten Anschluss und den dritten Anschluss eingeschleift sind.

**4.** Bidirektionaler Gleichstromsteller nach Anspruch 3, **gekennzeichnet durch**

- ein zweites induktives Bauelement (L2), das mit der Parallelschaltung aus zweitem Schaltmittel und zweiter Freilaufdiode seriell zwischen den ersten Anschluss und den dritten Anschluss eingeschleift ist.

**5.** Bidirektionaler Gleichstromsteller nach einem der vorhergehenden Ansprüche, **gekennzeichnet durch**

- ein drittes Schaltmittel (S3) und
- eine dritte Freilaufdiode (D3), wobei

- das dritte Schaltmittel und die dritte Freilaufdiode parallel geschaltet sind und
- das dritte Schaltmittel und die dritte Freilaufdiode zwischen den ersten Anschluss und den zweiten Anschluss eingeschleift sind.

**6.** Bidirektionaler Gleichstromsteller nach Anspruch 5, **gekennzeichnet durch**

- einen ersten Kondensator (CZ1),
- einen zweiten Kondensator (CZ2),

- wobei der erste Kondensator und der zweite Kondensator seriell zwischen den dritten Anschluss und den vierten Anschluss eingeschleift sind,

- eine erste Diode (D5),

- wobei die erste Diode in Durchlassrichtung zwischen einen Verbindungsknoten (N3) des ersten Kondensators und des zweiten Kondensators und einen Verbindungsknoten (N1) der Parallelschaltung aus zweitem Schaltmittel und zweiter Freilaufdiode und der der Parallelschaltung aus drittem Schaltmittel und dritter Freilaufdiode eingeschleift ist, und

- eine zweite Diode (D6),

- wobei die zweite Diode in Sperrrichtung zwischen den Verbindungsknoten des ersten Kondensators und des zweiten Kondensators und einen Verbindungsknoten (N2) der Parallelschaltung aus drittem Schaltmittel und dritter Freilaufdiode und der der Parallelschaltung aus erstem Schaltmittel und erster Freilaufdiode eingeschleift ist.

**7.** Bidirektionaler Gleichstromsteller nach Anspruch 5, **gekennzeichnet durch**

- einen ersten Kondensator (CZ1),
- einen zweiten Kondensator (CZ2),
- wobei der erste Kondensator und der zweite Kondensator seriell zwischen den dritten Anschluss und den vierten Anschluss eingeschleift sind,
- ein viertes Schaltmittel (S4) und
- eine vierte Freilaufdiode (D4), wobei

- das vierte Schaltmittel und die vierte Freilaufdiode parallel geschaltet sind,
- das zweite induktive Bauelement, die Parallelschaltung aus drittem Schaltmittel und dritter Freilaufdiode, die Parallelschaltung aus viertem Schaltmittel und vierter Freilaufdiode und das erste induktive Bauelement seriell zwischen den ersten Anschluss und den zweiten Anschluss eingeschleift sind, und

- ein Verbindungsknoten (N3) des ersten Kondensators und des zweiten Kondensators und ein Verbindungsknoten (N4) der Parallelschaltung aus drittem Schaltmittel und dritter Freilaufdiode und der Parallelschaltung aus viertem Schaltmittel und vierter Freilaufdiode elektrisch miteinander verbunden sind.

**8.** Bidirektionaler Gleichstromsteller nach einem der vorhergehenden Ansprüche, **dadurch gekennzeichnet, dass** der Parallelschaltung aus erstem Schaltmittel und erster Freilaufdiode, der Parallelschaltung aus zweitem Schaltmittel und zweiter Freilaufdiode, der Parallelschaltung aus drittem Schaltmittel und dritter Freilaufdiode und/oder der Parallelschaltung aus viertem Schaltmittel und vierter Freilaufdiode ein Kondensator (C1~C3) parallel geschaltet ist.

**9.** Bidirektionaler Gleichstromsteller nach einem der vorhergehenden Ansprüche, **dadurch gekennzeichnet, dass** die Schaltmittel IGBTs (insulated-gate bipolar transistor) sind.

**10.** System, umfassend:

- einen Energiespeicher (CE) und
- einen Gleichrichter/Wechselrichter (GR/WR), **gekennzeichnet durch**
- mindestens einen bidirektionalen Gleichstromsteller (GS1~GSn) nach einem der Ansprüche 1 bis 9.

11. System nach Anspruch 10, **dadurch gekennzeichnet, dass** der Energiespeicher ein Kondensator mit hoher Energiedichte, insbesondere ein Doppelschicht-Kondensator ist.

12. System nach Anspruch 10 oder 11, **gekennzeichnet durch** eine mit dem Gleichrichter/Wechselrichter (GR/WR) gekoppelte Drehstrommaschine (DM), eine mit dem Gleichrichter/Wechselrichter (GR/WR) gekoppelte Transversalflussmaschine und/oder ein mit dem Gleichrichter/Wechselrichter (GR/WR) gekoppeltes Verbundnetz.

13. System nach einem der Ansprüche 10 bis 12, **dadurch gekennzeichnet, dass** mindestens zwei parallel geschaltete bidirektionale Gleichstromsteller (GS1~GSn) vorgesehen sind, wobei die jeweiligen Schaltmittel eines der mindestens zwei bidirektionalen Gleichstromsteller bezüglich der jeweiligen Schaltmittel eines anderen der mindestens zwei bi- direktionalen Gleichstromsteller versetzt synchroni- siert angesteuert sind.

Fig.1

# Fig.2

Fig.3

Fig.4

Fig.5

Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005041825 A1